**Europäisches Patentamt**

**European Patent Office**

**Office européen des brevets**

(19)

(11) Veröffentlichungsnummer : **0 411 485 B1**

(12)

# EUROPÄISCHE PATENTSCHRIFT

(45) Veröffentlichungstag der Patentschrift :
**13.12.95 Patentblatt 95/50**

(51) Int. Cl.⁶ : **H04B 1/16**

(21) Anmeldenummer : **90114424.6**

(22) Anmeldetag : **27.07.90**

(54) Verfahren zum Erfassen von Mehrwegeverzerrungen beim FM-Rundfunkempfang und Schaltungsanordnung zur Durchführung des Verfahrens

(30) Priorität : **03.08.89 DE 3925629**

(43) Veröffentlichungstag der Anmeldung :
**06.02.91 Patentblatt 91/06**

(45) Bekanntmachung des Hinweises auf die Patenterteilung :
**13.12.95 Patentblatt 95/50**

(84) Benannte Vertragsstaaten :
**AT DE FR GB IT**

(56) Entgegenhaltungen :
**EP-A- 0 069 214**
**EP-A- 0 117 946**
**DE-A- 3 243 146**
**DE-A- 3 721 918**

(73) Patentinhaber : **GRUNDIG E.M.V.**
**Elektro-Mechanische Versuchsanstalt Max Grundig GmbH & Co. KG**
**Kurgartenstrasse 37**
**D-90762 Fürth (DE)**

(72) Erfinder : **Glaab, Arnold, Dr., Grundig E.M.V.**
**Max Grundig,**
**holländ Stiftung**
 **Co. KG**
**Kurgartenstrasse 37, D-8510 Fürth/Bay (DE)**

## Beschreibung

Die Erfindung betrifft ein Verfahren zum Erkennen von Mehrwegeempfangsstörungen beim Empfang von frequenzmodulierten Rundfunksendungen mit einem mobilen Rundfunkempfänger sowie eine Schaltungsanordnung zur Durchführung des Verfahrens.

Mehrwegeempfangsstörungen treten insbesondere bei in Kraftfahrzeugen betriebenen UKW-Rundfunkempfängern auf, da sich die Empfangsverhältnisse durch die Bewegung des Fahrzeuges fortlaufend ändern. Zum einen erscheinen sie als steile Einbrüche im Feldstärkesignal, da es je nach Phasenlage und Amplitude des Umwegsignales zu frequenzselektiven Auslöschungen im HF-Signal kommt. Zum anderen entstehen Klirranteile der Nutzmodulation, deren Spektrum im demodulierten Multiplex-Signal als Maß für den Störgrad ausgewertet werden kann. Die im zweiten Fall genannten Störungen sind unabhängig von der Signal-Feldstärke; sie treten nur bei NF-Modulation der Trägerfrequenz auf.

Das sichere Erkennen von Mehrwegeempfangsstörungen kann als Kriterium für das automatische Umschalten des Empfängers auf eine andere Empfangsfrequenz innerhalb derselben Programmkette (Frequenz-Diversity) oder auf einen getrennten Empfängerzweig mit eigener Empfangsantenne (Antennen-Diversity) genutzt werden. Dabei ist es aber notwendig, daß die Umschaltschwelle dem subjektiven Störeindruck einer akustischen Beurteilung durch den Gerätebenutzer entspricht.

Gerade bei der Auswertung des Feldstärkesignals als Umschaltkriterium für den Empfänger stellt man immer wieder fest, daß keine Übereinstimmung zwischen der subjektiv empfundenen Lästigkeit einer Mehrwegeverzerrung und dem gemessenen Störpegel besteht.

Es werden durch das aus DE 37 21 918 C1 bekannte Verfahren Mehrwege-, Nebenkanal- und Gleichkanalstörungen erkannt. Hierfür wird ein Feldstärkeanzeigesignal in unterschiedlichen Frequenzbereichen, in denen die unterschiedlichen Störungsarten auftreten, unterschiedlich verstärkt, für alle Störungsarten summiert und über der Zeit integriert. Da die Feldstärkeschwankungen aufgrund der Störungen in den Frequenzbereichen f > 1 kHz, 8 kHz < f < 50 kHz und f > 80 kHz liegen, werden diese Frequenzbereiche mit unterschiedlicher Gewichtung aufsummiert. Anschließend wird das derart gewichtete Signal von dem Feldstärkeanzeigesignal in der Stereo-Überblendschaltung subtrahiert.

Von Nachteil ist, daß ein Feldstärkeanzeigesignal benötigt wird. Weiterhin ist eine Erkennung der Feldstärke von Störungen in Abhängigkeit von der Frequenz nicht möglich, da sie vor dem Integrierer aufsummiert werden.

Aus der EP 117 946 A2 ist ein Meßsystem für Interferenzstörungen auf Nachbarkanälen bekannt. Dabei wird das Verhältnis berechnet von der durch die Interferenz in der Frequenz verschobenen zu der nicht verschobenen Signalkomponente. Dies entspricht dem Interferenzverhältnis zwischen Übertragungskanälen. Dies wird durch eine Hüllkurvendetektion mit anschließender Glättung und Quadrierung sowie Quotientenbildung erreicht.

Ein Nachteil des vorliegenden Meßsystems besteht darin, daß es Störungen durch Mehrwegeempfang, welche bei mobilem Empfang einen weit überwiegenden Anteil haben, nicht feststellen kann.

Aus der EP 0 069 214 A1 ist eine Schaltungsanordnung zur Ermittlung der Empfangsqualität bekannt. Zur Beurteilung der Empfangsqualität wird das Empfangssignal nach einem FM-Demodulator einem selektiven Filter zugeleitet, welches ein oberhalb des Stereo-Multiplexsignals gelegenes Störsignal herausfiltert. Dieses Störsignal wird über eine Integrationsstufe einer Pegelvergleichsstufe zugeleitet. Deren Ausgangssignal schaltet als bewertetes Störsignal eine Steuerschaltung, welche eine Sendersuchlaufschaltung oder eine Antennen-Diversity-Schaltung umfaßt.

Ein Nachteil der vorliegenden Schaltungsanordnung besteht darin, daß der Modulationspegel nur insoweit berüchsichtigt wird, daß bei Modulationspausen die Störspannungsmessung über eine Torschaltung gesperrt wird.

Im Gegensatz zu diesem bekannten Stand der Technik liegt der hier beschriebenen Erfindung die Aufgabe zugrunde, den aus dem Multiplexsignal gewonnenen Störpegel ins Verhältnis zu dem aus dem Nutzsignal gewonnenen Pegel zu setzen, um eine bessere Übereinstimmung zwischen dem gemessenen und subjektiv empfundenen Störpegel zu erzielen.

Die Lösung dieser Aufgabe erfolgt gemäß der Erfindung durch die im Kennzeichen des Patentanspruches 1 genannten Merkmale. Vorteilhafte Ausgestaltungen der Erfindung sowie eine Schaltungsanordnung zur Durchführung des Verfahrens sind in den Unteransprüchen offenbart.

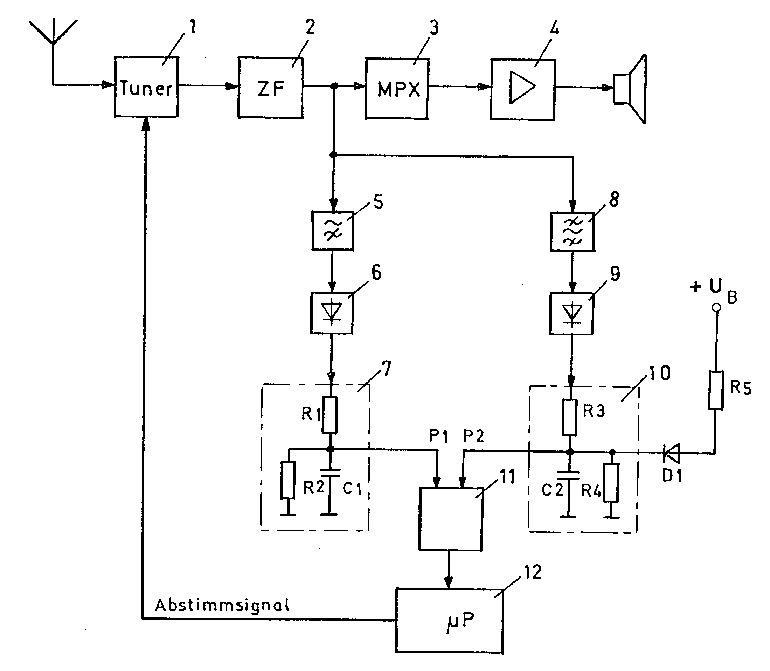

Die Erfindung wird anhand der in der einzigen Zeichnung dargestellten Schaltungsanordnung erläutert. Die Figur zeigt in einem Blockschaltbild ein Ausführungsbeispiel des erfindungsgemäßen Rundfunkempfängers.

In an sich bekannter Weise enthält der im Blockschaltbild dargestellte Rundfunkempfänger einen UKW-Tuner 1, ein ZF-Teil 2 zum selektiven Verstärken und Demodulieren der Zwischenfrequenz, einen Stereo-Decoder 3 und einen Endverstärker 4.

Vom Ausgang des ZF-Teiles 2 wird das demodulierte Multiplexsignal abgezweigt und dem Hochpaß 5 zugeführt, dessen untere Grenzfrequenz vorzugsweise bei ca. 75 kHz liegt, um einen genügenden Frequenzabstand zu der mit RDS (Radio Daten System)-Signalen modulierten Hilfsträgerfrequenz von 57 kHz zu haben. Das ausgefilterte Störsignal gelangt über die Gleichrichterstufe 6 zur ersten Integrationsstufe 7 und wird im Kondensator C1 über den Widerstand R1 zu einer Gleichspanung mit dem Pegel P1 integriert.

Gleichzeitig gelangt das demodulierte Multiplexsignal über den Bandpaß 8, dessen Durchlaßbereich sich vorzugsweise zwischen ca. 500 Hz und 5,5 kHz erstreckt, und die Gleichrichteranordnung 9 zur zweiten Integrationsstufe 10. Bei vorhandener Modulation lädt sich der Kondensator C2 über den Widerstand R3 auf den Gleichspannungspegel P2 auf.

Die beiden Gleichspannungen mit den Pegeln P1 und P2 werden der Vergleichsschaltung 11 zugeführt, die den Quotient aus den beiden Pegeln bildet und für den Fall

$$\frac{P1}{P2} \geqq A$$

ein Steuersignal an den Mikroprozessor 12 liefert, der aufgrund dessen z.B. einen Frequenzwechsel des Synthesizer-Tuners einleitet. Der Wert A kann zur Festlegung der Umschaltschwelle beliebig vorgegeben werden.

Um zu vermeiden, daß bei geringer Modulation durch andere Störungen, z.B. HF-Störungen im Bordnetz des Fahrzeuges oder Nebenkanalstörungen, eine Umschaltung des Tuners ausgelöst wird, ist in einer vorteilhaften Ausgestaltung der Erfindung vorgesehen, dem Kondensator C2 des Integrationsgliedes 10 von der Spannungsquelle $U_B$ über den Widerstand R5 und die Entkopplungsdiode D1 eine Vorspannung zu liefern. Der Widerstand R5 und der Entladewiderstand R4 bilden dabei im wesentlichen den für die Höhe der Vorspannung maßgebenden Spannungsteiler, sofern der Spannungsabfall an der Diode D1 klein gegenüber der Bezugsspannung $U_B$ ist.

Die Vergleichsschaltung 11 kann in einer weiteren vorteilhaften Ausgestaltung der Erfindung durch ein Softwareprogramm für den Mikroprozessor 12 ersetzt werden.

Darin kann auch der nach Anspruch 2 vorgesehene Mindestpegel der Nutzmodulation als Schwellwert vorgehalten werden. Dieser Schwellwert kann außerdem gleitend über eine längere Integrationszeit aus dem sich ändernden Gleichspannungspegel P 2 gewonnen werden. Sofern der Mikroprozessor 12 keine Eingänge mit integrierter Analog-/Digitalumsetzung besitzt, sind entsprechende Wandlerstufen extern vorzusehen.

## Patentansprüche

1. Verfahren zum Erkennen von Mehrwegeempfangsstörungen beim Empfang von frequenzmodulierten Rundfunksendungen mit einem mobilen Rundfunkempfänger, wobei einer Vergleichsschaltung der Pegel des Spektrums des heruntergemischten HF-Signals oberhalb der höchsten Modulationsfrequenz zugeführt wird, **dadurch gekennzeichnet,** daß als HF-Signal das Stereo-Multiplex-Signal benutzt wird, daß der Pegel des Spektrums des heruntergemischten HF-Signals oberhalb der höchsten Modulationsfrequenz ausgewertet und in der Vergleichsschaltung mit dem Pegel der Nutzmodulation verglichen wird und daß eine Mehrwegeempfangsstörung erkannt wird, wenn der Quotient der beiden Signalpegel eine vorgegebene Schwelle überschreitet.

2. Verfahren nach Anspruch 1, **dadurch gekennzeichnet,** daß der Vergleichsschaltung unabhängig von der tatsächlichen Modulation ein Mindestpegel für die Nutzmodulation angeboten wird.

3. Schaltungsanordnung zur Durchführung der Erkennung von Mehrwegeempfangsstörungen beim Empfang von frequenzmodulierten Rundfunksendungen mit einem mobilen Rundfunkempfänger, welche Schaltungsanordnung ein Filter aufweist, wodurch aus dem Empfangssignal das Nutzsignal ausgeblendet wird, und welche Schaltungsanordnung eine Vergleichsschaltung (11) aufweist, um den Pegel des Nutzsignales mit einem weiteren Pegel zu vergleichen, **dadurch gekennzeichnet,** daß das Filter ein Hochpaß (5) ist, dem das Multiplexsignal zugeleitet wird, dessen untere Grenzfrequenz oberhalb der höchsten Frequenz des Multiplexsignals und der mit RDS-Signalen modulierten Hilfsträgerfrequenz von 57 kHz liegt, daß der Hochpaß (5) über eine erste Gleichrichteranordnung (6) mit einem ersten Integrationsglied (7) verbunden ist, daß das Multiplexsignal einem Bandpaß (8) mit einer Mittenfrequenz von ca. 3 kHz und einer Bandbreite von ca. 2,5 kHz zugeleitet wird, daß der Bandpaß (8) über eine zweite Gleichrichteranordnung (9) mit einem zweiten Integrationsglied (10) verbunden ist, daß die Integrationsglieder (7, 10) mit der Vergleichsschaltung (11) zum Vergleichen der Pegel (P1, P2) der Integrationsglieder (7, 10) und die Vergleichsschaltung (11) mit einem Mikroprozessor (12) verbunden ist, um an diesen Mikroprozessor ein Steuersignal zu leiten, wenn der Quotient P1/P2 einen bestimmten Schwellwert überschreitet.

4. Schaltungsanordnung nach Anspruch 3, **dadurch gekennzeichnet,** daß ein Kondensator (C2) des Integrationsgliedes (10) über eine Entkopplungsdiode (D1) und einen Vorwiderstand (R5) mit einer Konstantspannungsquelle ($U_B$) leitend verbunden ist.

5. Schaltungsanordnung nach Anspruch 3 oder 4, **dadurch gekennzeichnet**, daß die Vergleichsschaltung (11) durch einen im Gerät vorhandenen Mikroprozessor (12) realisiert wird, welcher ein entsprechendes Steuerprogramm aufweist.

## Claims

1. A method of detecting multipath reception disturbances in the reception of frequency-modulated broadcast transmissions with a mobile broadcast receiver, where a comparator circuit is supplied with the level of the spectrum of the mixed-down HF signal above the highest modulation frequency, characterised in that the stereo multiplex signal is used as HF signal, that the level of the spectrum of the mixed-down HF signal above the highest modulation frequency is analyzed and in the comparator circuit is compared with the level of the useful modulation and that multipath reception disturbances are detected when the quotient of the two signal levels exceeds a given threshold.

2. A method as claimed in Claim 1, characterised in that a minimum level for the useful modulation is offered to the comparator circuit independently of the actual modulation.

3. A circuit arrangement for carrying out the detection of multipath reception disturbances during the reception of frequency-modulated broadcast transmissions with a mobile broadcast receiver, which circuit arrangement comprises a filter with which the useful signal is gated out of the received signal, and which circuit arrangement comprises a comparator circuit (11) for the comparison of the level of the useful signal with a further level, characterised in that the filter is a highpass filter (5) which is supplied with the multiplex signal and the lower cut-off frequency of which lies above the highest frequency of the multiplex signal and the auxiliary carrier frequency of 57 kHz modulated with RDS signals, that the highpass filter (5) is connected via a first rectifier arrangement (6) to a first integrator (7), that the multiplex signal is fed to a bandpass filter (8) with a middle frequency of approximately 3 kHz and a band width of approximately 2.5 kHz, that the band-pass filter (8) is connected via a second rectifier arrangement (9) to a second integrator (10), that the integrators (7, 10) are connected to the comparator circuit (11) for the comparison of the levels (P1, P2) of the integrators (7, 10), and the comparator circuit (11) is connected to a microprocessor (12) in order to supply said microprocessor with a control signal when the quotient P1/P2 exceeds a specified threshold value.

4. A circuit arrangement as claimed in Claim 3, characterised in that a capacitor (C2) of the integrator (10) is conductively connected to a constant voltage source ($U_B$) via a decoupling diode (D1) and a series resistor (R5).

5. A circuit arrangement as claimed in Claim 3 or 4, characterised in that the comparator circuit (11) is formed by a microprocessor (12) which is present in the device and which possesses a corresponding control program.

## Revendications

1. Procédé pour identifier des perturbations par réception sur voies multiples lors de la réception d'émissions radio modulées en fréquence avec un récepteur radio mobile, et selon lequel le niveau du spectre du signal HF, dont la fréquence est réduite par mélange, au-dessus de la fréquence maximale de modulation est envoyé à un circuit comparateur, caractérisé en ce qu'on utilise comme signal HF le signal stéréo multiplex, que le niveau du spectre du signal HF, dont la fréquence est réduite par mélange, au-dessus de la fréquence maximale de modulation est évalué et est comparé, dans le circuit comparateur, au niveau de la modulation utile et qu'une perturbation par réception sur voies multiples est identifiée lorsque le quotient des deux niveaux du signal dépasse d'un seuil prédéterminé.

2. Procédé selon la revendication 1, caractérisé en ce qu'indépendamment de la modulation effective, un niveau minimum pour la modulation utile est envoyé au circuit comparateur.

3. Montage pour identifier des perturbations par réception sur voies multiples lors de la réception d'émissions radio modulées en fréquence avec un récepteur radio mobile, lequel montage comporte un filtre, de sorte que le signal utile est extrait du signal de réception, et lequel montage comporte un circuit comparateur (11) servant à comparer le niveau du signal à utile à un autre niveau, caractérisé en ce que le filtre est un filtre passe-haut (5), auquel est envoyé le signal multiplex et dont la fréquence limite inférieure est supérieure à la fréquence maximale du signal multiplex et à la fréquence de porteuse auxiliaire de 57 kHz, qui est modulée par des signaux RDS (système de données radio), que le filtre passe-haut (5) est relié par l'intermédiaire d'un premier circuit redresseur (6) à un premier circuit intégrateur (7), que le signal multiplex est envoyé à un filtre passe-bande (8) possédant une fréquence centrale d'environ 3 kHz et une largeur de bande d'environ 2,5 kHz, que le filtre passe-bande (8) est relié par l'intermédiaire d'un second circuit redresseur (9) à un second circuit intégrateur (10), que les circuits intégrateurs (7,10) sont reliés au circuit comparateur (11) pour comparer les niveaux (P1,P2) des circuits intégrateurs (7,10) et que le circuit comparateur (11) est relié à un microprocesseur (12), de manière à envoyer un signal de commande à ce microprocesseur lorsque le quotient P1/P2 dépasse une valeur de seuil déterminée.

4. Montage selon la revendication 3, caractérisé en ce qu'un condensateur (C2) du circuit intégrateur (10) est relié de façon conductrice par l'intermédiaire d'une diode de découplage (D1) et d'une résistance additionnelle (R5) à une source de tension constante ($U_B$).

5. Montage selon la revendication 3 ou 4, caractérisé en ce que le circuit comparateur (11) est constitué par un microprocesseur (12) présent dans l'appareil et qui possède un programme de commande correspondant.